(19)

Europäisches Patentamt
European Patent Office
Office européen des brevets

(11) **EP 2 924 680 A2**

(12) **EUROPEAN PATENT APPLICATION**

(43) Date of publication:
**30.09.2015 Bulletin 2015/40**

(51) Int Cl.:
***G09G 3/32*** *(2006.01)*   ***G09G 3/20*** *(2006.01)*

(21) Application number: **15160470.9**

(22) Date of filing: **24.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **26.03.2014   US 201461970813 P**
**13.03.2015   US 201514658039**

(71) Applicant: **Samsung Display Co., Ltd.**
**Gyeonggi-do (KR)**

(72) Inventors:
• **Lu, Ning**
  **San José, CA 95112 (US)**
• **Tian, Dihong**
  **San José, CA 95112 (US)**

(74) Representative: **Dr. Weitzel & Partner**
**Patent- und Rechtsanwälte mbB**
**Friedenstrasse 10**
**89522 Heidenheim (DE)**

(54) **SYSTEM AND METHOD FOR STORING AND RETRIEVING PIXEL PARAMETERS IN A DISPLAY PANEL**

(57)    A system and a method for compensating pixel luminance of a display panel includes receiving compressed compensation parameters corresponding to parameter blocks of sub-pixels, receiving an input image, adjusting the input image according to the compressed compensation parameters, and displaying the adjusted input image at the display panel.

FIG. 4

**Description**

BACKGROUND

The present application relates to improving color variation of pixels in a display panel. More particularly, it relates to a system and a method for storing and retrieving pixel parameters in a display panel.

The display resolution of mobile devices has steadily increased over the years. In particular, display resolutions for mobile devices have increased to include full high-definition (HD) (1920x1080) and in the future will include higher resolution formats such as ultra HD (3840x2160). The size of display panels, however, will remain roughly unchanged due to human factor constraints. The result is increased pixel density which in turn increases the difficulty of producing display panels having consistent quality. Furthermore, organic light-emitting diode (OLED) display panels suffer from color variation among pixels caused by variation of current in the pixel driving circuit (thus affecting luminance of the pixel), which may result in visible artifacts (e.g., mura effect). Increasing the resolution or number of pixels may further increase the likelihood of artifacts.

The above information discussed in this Background section is only for enhancement of understanding of the background of the described technology and therefore it may contain information that does not constitute prior art that is already known to a person having ordinary skill in the art.

SUMMARY

According to a first aspect, a method for compensating pixel luminance of a display panel is described. The method may include: receiving compressed compensation parameters corresponding to parameter blocks of sub-pixels; receiving an input image; adjusting the input image according to the compressed compensation parameters; and displaying the adjusted input image at the display panel.

The parameter blocks may be grouped based on at least one of: color of the sub-pixels, luminance level of the sub-pixels, and a spatial location of the sub-pixels.

The compressed compensation parameters may include compensation parameters that are compressed by: generating parameter coefficients based on a lookup table for each compensation parameter of the compensation parameters, each compensation parameter corresponding to respective ones of the sub-pixels and grouped into the parameter blocks; and forming a bit stream with the parameter coefficients for each parameter block of the parameter blocks.

The method may further include decompressing the received compressed compensation parameters before the adjusting of the input image.

The decompressing may include: decoding bit streams of the compressed compensation parameters to recover parameter coefficients based on a lookup table; and performing an inverse mathematical transform to recover the compensation parameters corresponding to respective ones of the sub-pixels of the display panel.

According to a second aspect, a method for compensating pixel luminance of a display panel is described. The method may include: retrieving a compressed bit stream from memory; decoding the compressed bit stream based on a lookup table to generate parameter coefficients for compensation parameters corresponding to respective ones of sub-pixels within a parameter block of sub-pixels; performing an inverse mathematical transform to the parameter coefficients to recover the compensation parameters; and applying the recovered compensation parameters to an input image signal to correct the pixel luminance of the display panel.

The number of bits in the bit stream may be less than a total number of bits of the compensation parameters of the parameter block.

The compensation parameters of the parameter block may include compensation parameters that correspond to same color sub-pixels.

The parameter blocks may be grouped based on luminance level of the sub-pixels, or based on a spatial location of the sub-pixels.

The compensation information contained in the compensation parameter may be shared with other compensation parameters in the same parameter block.

The parameter block may correspond to a row of sub-pixels.

All parameter blocks may have a same number of compensation parameters.

According to a third aspect, a display panel is described. The display panel may include: a memory comprising compressed compensation parameters for sub-pixels of the display panel; a decoder configured to decompress the compressed compensation parameters; and a processor configured to apply the decompressed compensation parameters to input image signals, each compensation parameter of the compensation parameters corresponding to respective ones of the sub-pixels, wherein the compensation parameters are compressed by: grouping the compensation parameters into parameter blocks; generating parameter coefficients for each compensation parameter of the parameter blocks based on a lookup table; and forming a bit stream with the parameter coefficients for each parameter block of the parameter blocks.

The compensation parameters may be grouped according to a color of corresponding sub-pixels.

The compensation parameters may be grouped according to a luminance level of corresponding sub-pixels.

The compensation parameters may be grouped according to a spatial location corresponding sub-pixels.

The parameter blocks may have a same size.

The generating of the parameter coefficients may include applying a mathematical transform to each compensation parameter.

The mathematical transform may be a Hadamard transform or a Haar transform.

The decompressing of the compressed compensation parameters may include: decoding the bit stream to recover the parameter coefficients based on a lookup table; and performing an inverse mathematical transform to recover the compensation parameters corresponding to respective ones of the sub-pixels of the display panel.

BRIEF DESCRIPTION OF THE DRAWINGS

The above and other aspects and features of the present invention will become apparent to those skilled in the art from the following detailed description of the example embodiments with reference to the accompanying drawings.

FIG. 1 is an example schematic and block diagram of a display device.

FIG. 2 shows a magnified view of a display panel of the display device shown in FIG. 1.

FIG. 3 is an illustration of an example color sub-pixel layout having a 4:2:2 color sampling scheme.

FIG. 4 is a block diagram of the display panel of FIG. 1 showing information flow of pixel parameters from the calibration phase during manufacturing.

FIG. 5 shows an example method of grouping pixel parameters into blocks for a single luminance level.

FIG. 6 is a flow diagram for compressing the pixel parameters for a single luminance level.

FIG. 7 shows an example method of grouping pixel parameters into super blocks for multiple luminance levels.

FIG. 8 is a flow diagram for compressing the pixel parameters for multiple luminance levels.

DETAILED DESCRIPTION

Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey some of the aspects and features of the present invention to those skilled in the art. Accordingly, processes, elements, and techniques that are not necessary to those having ordinary skill in the art for a complete understanding of the aspects and features of the present invention are not described with respect to some of the embodiments of the present invention. Unless otherwise noted, like reference numerals denote like elements throughout the attached drawings and the written description, and thus, descriptions thereof will not be repeated. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section described below could be termed a second element, component, region, layer or section, without departing from the spirit and scope of the present invention.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. However, when an element or layer is referred to as being "directly on," "directly connected to," or "directly coupled to" another element or layer, there are no intervening elements or layers present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises" and/or "comprising," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the present invention refers to "one or more embodiments of the present invention."

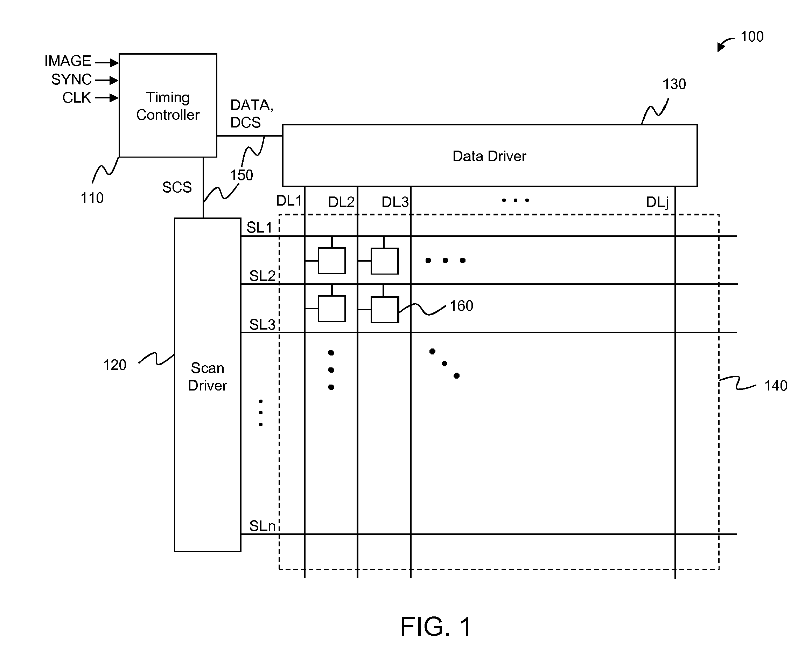

FIG. 1 shows a schematic and a block diagram of a display device 100, which includes a timing controller 110, a scan driver 120, a data driver 130, and a plurality of pixels 160 in a display panel 140. Each of the plurality of pixels 160 is coupled to respective scan lines SL1 to SLn, where n is a positive integer, and data lines DL1 to DLj, where j is a positive integer, at crossing regions of the scan lines SL1 to SLn and the data lines DL1 to DLj. Each of the pixels 160 receives a data signal from the data driver 130 through the respective one of the data lines DL1 to DLj, when a scan signal is received from the scan driver 120 through a respective one of the scan lines SL1 to SLn.

The timing controller 110 receives an image signal IMAGE, a synchronization signal SYNC, and a clock signal CLK from an external source (e.g., external to the timing controller). The timing controller 110 generates image data DATA, a data driver control signal DCS, and a scan driver control signal SCS. The synchronization signal SYNC may include a vertical synchronization signal Vsync and a horizontal synchronization signal Hsync.

The timing controller 110 is coupled to the data driver 130 and the scan driver 120. The timing controller 110 transmits the image data DATA and the data driver control signal DCS to the data driver 130, and transmits the scan driver control signal SCS to the scan driver 120.

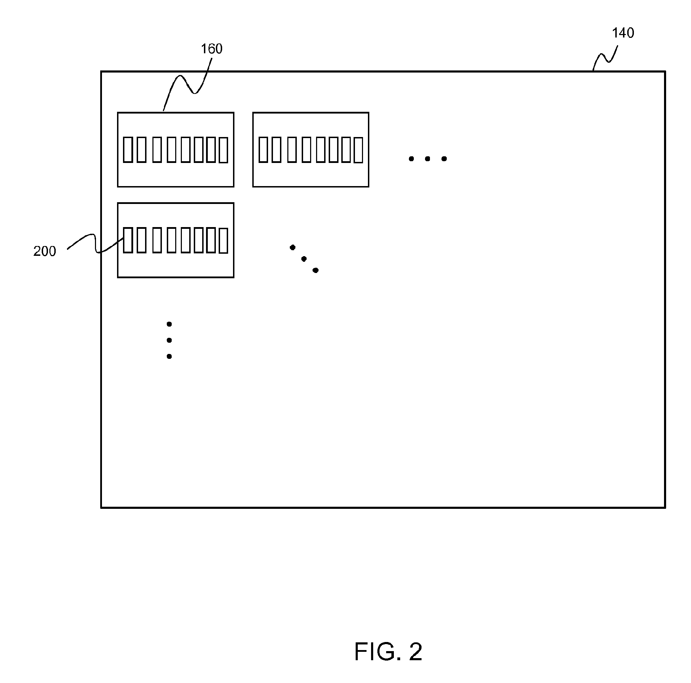

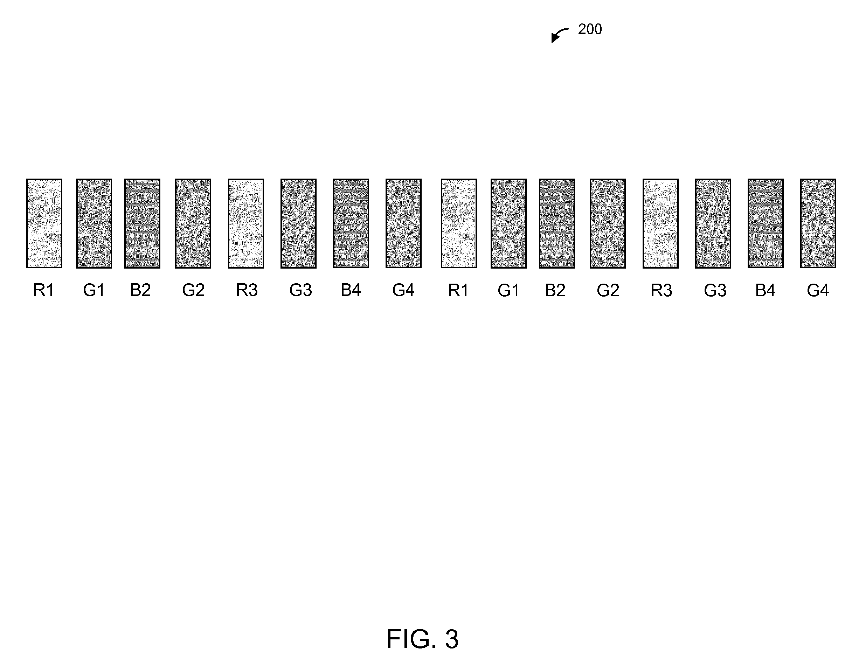

FIG. 2 shows a magnified view of the plurality of pixels 160 in the display panel 140. Each of the plurality of pixels 160 includes a plurality of sub-pixels 200 having a R1 G1 B2 G2 R3 G3 B4 G4 layout, as shown in more detail in FIG. 3, where R represents a red sub-pixel, G represents a green pixel, and B represents a blue pixel. This arrangement would be understood by a person having ordinary skill in the art as having a 4:2:2 color sampling (i.e., each pixel corresponding to two sets of eight color sub-pixels). While a 4:2:2 color sampling layout is described herein as an example, the description is not intended to be limiting. Thus, the pixels can have other arrangements know to those skilled in the art, such as, for example, 4:4:4.

Variation of the luminance of pixels, which may be caused by a variation in a driving current of a pixel driving circuit in an OLED display panel, is inherent to each display panel. Display panels can be calibrated during manufacturing so that the variation is compensated for during operation. The variation can be modeled into per-pixel or per-sub-pixel compensation parameters and digital compensation logic can be introduced as a post-manufacturing solution to maintain the color variation under a perceivable threshold. The per-pixel compensation parameters (or "parameters" hereinafter), are generally stored in memory for use by the digital compensation logic. The digital compensation logic compensates the display panel's pixels at various luminance levels. Each pixel may have multiple parameters that correspond to color variation at different luminance levels. For example, for a UHD-4K (3840x2160 resolution) panel with 4:2:2 color sampling, representing each sub-pixel parameter with, for example, 8 bits, may result in 128 megabits (Mb) of parameter information for a single luminance level. Storing compensation parameters with 8 bits for three luminance levels (e.g., high, medium, low luminance levels) would thus result in 384 Mb of parameter information. Storing 384 Mb of parameter data at the display level would increase the needed amount of storage memory to one that is too expensive to be equipped on a display panel. In many cases the memory size of some display panels may be only a few megabits. Thus, reducing the memory size requirements of the display panels can reduce manufacturing costs.

One method to reduce the memory requirement for storing the compensation parameters is to reduce the number of parameters that are stored in memory, for example, by storing only one parameter for a plurality of pixels or sub-pixels. However, merely reducing the number of parameters (e.g., by grouping the plurality of pixels or sub-pixels together) could reduce the effectiveness of any compensation logic using the parameters and may consequently degrade the image quality, especially when the size of the group is large.

According to an embodiment of the present invention, the parameters model variations of colors of the sub-pixels (e.g., red, green and blue) to produce a color at a given luminance level (e.g., high, mid and low levels). Each sub-pixel parameter, when quantized into a range of [0, 255], can be represented by 8 bits. Thus, each of the sub-pixels are compensated by applying the parameter to the input image signal for the corresponding sub-pixel. When the display panel is manufactured, all of the sub-pixels are measured to determine a compensation parameter that is specific to each particular sub-pixel so that the luminance levels of the sub-pixels are within an allowable range.

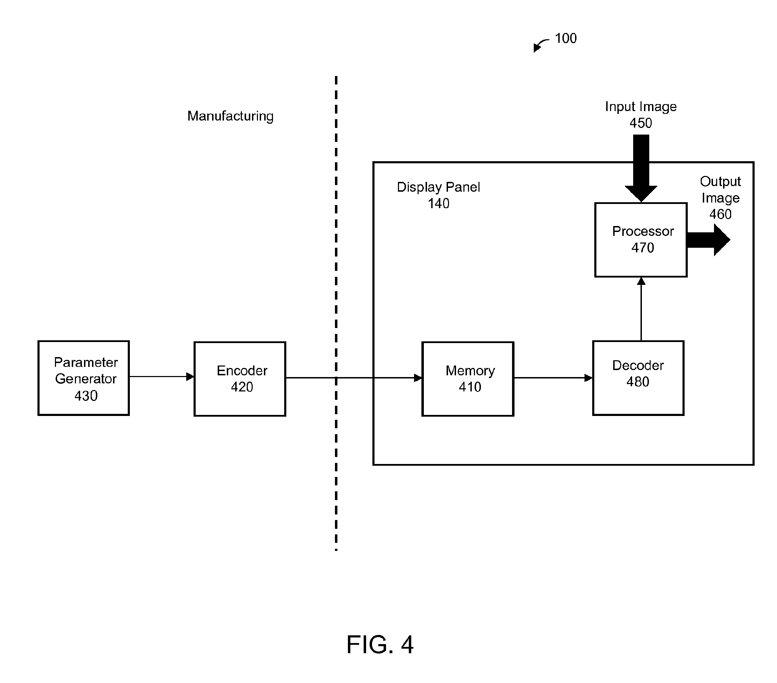

FIG. 4 shows the display panel 140 and a block diagram according to an embodiment that illustrates a method of compensating for the color variation of the pixels while reducing the memory requirements.

According to the embodiment, the parameters for a plurality of sub-pixels are compressed, thus reducing the number of bits that represent each of the parameters. For example, a parameter that is represented by 8 bits may be compressed such that the parameter is represented by just 1 bit. More specifically, the compression may be accomplished by grouping the sub-pixels of the display panel into blocks based on, for example, location of the sub-pixel within the display panel 140 and color of the sub-pixels. The parameters for each group are encoded and stored in memory. As such, the compression maintains a relatively high fidelity of the parameters, while providing light-weight computation that allows for the decoding of compressed compensation parameters at the same rate as the sub-pixels are rendered to the display.

As illustrated in FIG. 4, the parameter for each sub-pixel is generated by a parameter generator 430. The generated parameters are encoded by an encoder 420 and the encoded parameters are provided to the memory 410 for storage. The parameter generator 430 and the encoder 420 are utilized during manufacturing and therefore may be located separate from and external to the display panel 140. For example, the parameter generator 430 and the encoder 420 may be an external hardware or software module that is coupled with the display device 140 during manufacturing for calibration.

The display panel 140 includes a memory 410 for storing the parameters and a decoder 480 for decoding the parameters that are retrieved from the memory 410. The display panel 140 also includes a pixel processor 470 for processing an input image 450. That is, the decoded parameter provided from the decoder 480 is applied to the input image in the pixel processor 470 to compensate for color variation by the sub-pixel. The compensated image is displayed by the sub-pixel on the display panel 140 as an output image 460. That is, the adjusted input image is displayed by the display panel 140.

The pixel processor 470 may be a processor such as a central processing unit (CPU) which executes program instructions and interacts with other system components to perform various methods and operations according to embodiments of the present invention.

The memory 410 may be an addressable memory unit for storing instructions to be executed by the processor 470 such as, for example, a drive array, a flash memory, or a random access memory (RAM) for storing instructions used by the display device 100 that causes the processor 470 to execute further instructions stored in the memory.

The processor 470 may execute instructions of a software routine based on the information stored in the memory 410. A person having ordinary skill in the art should also recognize that the process may be executed via hardware, firmware (e.g. via an ASIC), or in any combination of software, firmware, and/or hardware. Furthermore, the sequence of steps of the process is not fixed, but can be altered into any desired sequence as recognized by a person of skill in the art. A person having ordinary skill in the art should also recognize that the functionality of various computing modules may be combined or integrated into a single computing device, or the functionality of a particular computing module may be distributed across one or more other computing devices without departing from the scope of the exemplary embodiments of the present invention.

According to an embodiment of the present invention, the sub-pixel parameters can be grouped into blocks of various sizes and patterns. For example, the parameters can be grouped according to their rows, or a plurality of rows to form a parameter block. A parameter block may be defined herein as, a parameter that corresponds to a plurality of parameters that are grouped together in a group, where each of the parameters corresponds to a sub-pixel. In some embodiments, the groups can be formed based on a portion of a row, a column or a portion of a column, or any other patterns (e.g., rectangular, square, etc.) where the sub-pixels of the patterns share common spatial characteristics (e.g., spatial locations).

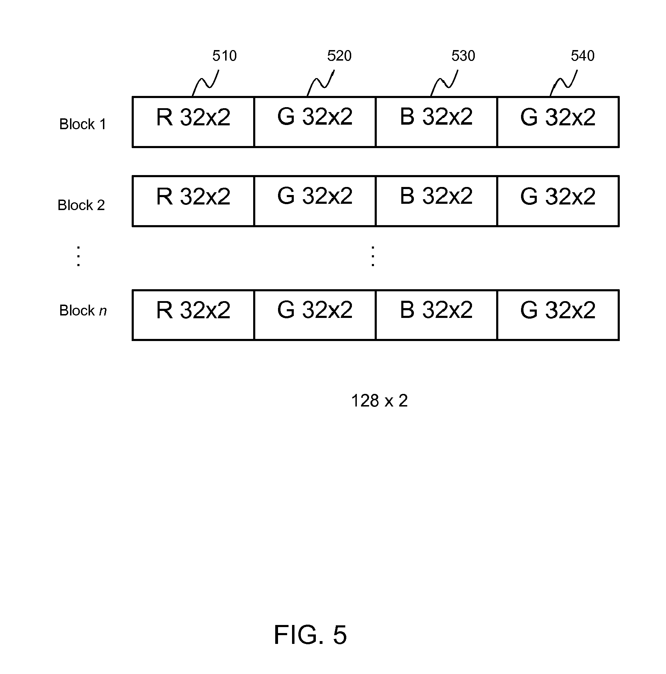

FIG. 5 shows an example embodiment where the parameters are grouped into n blocks (e.g., Block 1, Block 2, ..., Block n). According to this embodiment, each block is comprised of 256 sub-pixels formed by two rows of 128 sub-pixels (e.g., 128x2 sub-pixels). Therefore, this block of parameters comprises 256 parameters. In some embodiments, the block of 256 sub-pixels can be further grouped into sub-blocks. For example, FIG. 5 shows an embodiment where each 128x2 block is divided into four sub-blocks of 32x2 pixels. Furthermore, each sub-block comprises parameters corresponding to a single color of the sub-pixels. For example, sub-block 510 comprises parameters corresponding to just the red sub-pixels, sub-block 520 comprises parameters corresponding to just the green sub-pixels, sub-block 530 comprises parameters corresponding to just the blue sub-pixels, and sub-block 540 comprises parameters corresponding to just the green sub-pixels. The parameters are grouped in a manner such that the sub-pixels within the same group are likely to share parameter information. For example, the parameters for the sub-pixels of one color (e.g., red) share information with other parameters of the same color (e.g., red), instead of parameters of a different color (e.g., green). The parameters of the sub-pixels that are located in the same region of the display panel are also likely to have some similar properties that the information can be shared. Therefore, the parameters may be grouped into block based on color and location.

In some embodiments, the sub-pixel parameters are grouped such that the blocks include parameters corresponding to a greater number of sub-pixels in the horizontal direction as oriented in the drawings (e.g., row direction) rather than in the vertical direction (e.g., column direction). Consequently, this facilitates the signals being provided along the scan lines in the horizontal direction to save the line buffer memory and/or conserve processing power. For example, in a case where the screen width is comprised of 3840 pixels, and the sub-pixels are grouped in an 8x2 arrangement (instead of a 4x4 arrangement), the decoder may decode the same encoded parameters two times for two consecutive scan lines, or provide a line buffer to store 480 parameters (i.e., 3840/8 = 480). However, in the case of a 4x4 arrangement, the decoder may decode the same encoded parameter four times, thus twice the amount of computation is performed by the decoder, or provide a line bugger to store 960 parameters (i.e., 3840/4 = 960), which occupies twice the amount of memory.

In some embodiments, the parameters may be pre-processed before being grouped into blocks for compression, and post-processed accordingly after the parameters are decoded. One example of such pre- and post-processing is down-sampling and up-sampling. For instance, parameters of a UHD-4K resolution display panel may be down-sampled by a factor of two or a factor of four before being grouped into blocks for encoding, and accordingly, up-sampled by the same factor for pixel processing after the blocks are decoded. Such small-factor down-sampling also serves a purpose of removing any possible noise in the parameters due to calibration errors.

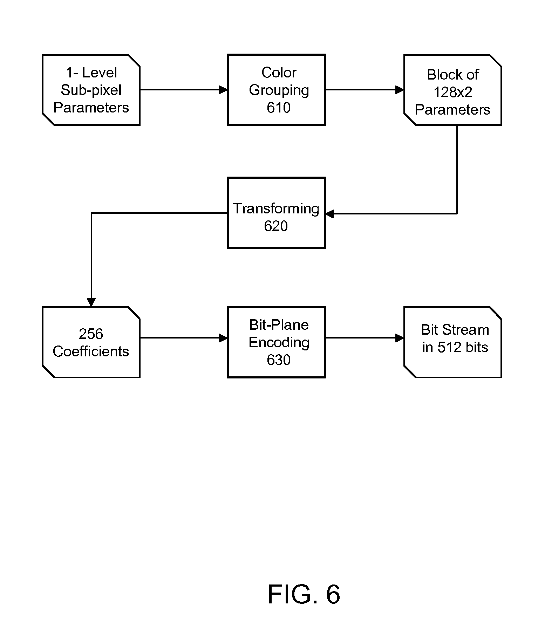

FIG. 6 shows a flow diagram for compressing the parameters for a single luminance level. According to the embodiment, the parameters for a single luminance level are determined for all sub-pixels of the display panel. The sub-pixels are grouped into blocks according to the color of the sub-pixels 610 as described above. In this example embodiment, one block has a size of 128x2 parameters. After grouping the parameters into blocks, a mathematical transform such as a Hadamard or Haar transform 620 is applied to each of the 256 parameters to generate a sequence of 256 integer coefficients following a predefined scan order depending on the size of the block. For some block sizes/arrangements, the scan order may be, for example, a progressive scan order, whereas for other block sizes/arrangements, the scan order may be a zigzag scan order. For example, the following integer transform may be applied:

$$T_2 = H_1 - H_2,$$

$$t = (H_1 + H_2)/2,$$

$$T_1 = H_3 - t,$$

$$T_3 = (t + H_3)/2,$$

where H represents the different luminance levels for each color sub-pixel (e.g., R, G, B) and T represents the value that will be used for encoding. By denoting $D(T_n)$ as the corresponding decoded values, the following may be calculated:

$$t = (D(T_3)*2 - D(T_1)) / 2,$$

$$H_3 = (D(T_3)*2 + D(T_1)) / 2,$$

$$H_2 = (t*2 - D(T_2)) / 2,$$

$$H_1 = (t*2 + D(T_2)) / 2.$$

The coefficients are then packed into a sequence of bits (e.g., bit stream) by scanning the coefficients from the highest bit plane to the lower bit planes and encoding 630 the bit planes as runs of zero and signs for each non-zero coefficient. In some embodiments, the encoding of the runs of zero may be according to a variable-length code (VLC) table, as well known to those having ordinary skill in the art. The scanning and encoding continues until the targeted data size (e.g., 512 bits for 4-to-1 compression) is reached. In other words, each of the 256 parameters is scanned according to a predefined scanning order to apply a Hadamard or Haar transform to generate 256 integer coefficients. A pre-generated Huffman code table (e.g., lookup table) is used to pack the coefficients into a sequence of bits by encoding 630, based on the probability of coefficients that are generated from testing statistics.

When the image is to be displayed on the display panel, the sequence of bits (e.g., bit stream) is retrieved from memory and decoded by the decoder into sub-pixel parameters for processing the image. According to the embodiment, the decoding includes de-packing each sequence of bits into a set of coefficients using the pre-generated code table (e.g. lookup table) and inverse transforming (e.g., inverse Hadamard or inverse Haar transform) the coefficients to a block of parameters. The parameter block is de-grouped into sub-pixel parameters corresponding to different color sub-pixels and/or different luminance levels according to the multi-channel format used by the encoding. The parameters are used by the pixel processor logic for producing the image on the display panel. Pixel processing is performed on the input image using the decoded pixel parameters. In some embodiments, the processing may be a scaling of the original sub-pixel value from the input image. That is:

$$I_{out} = a*I_{in}, 0 \leq a \leq 1,$$

where $I_{out}$ and $I_{in}$ denote the input and output sub-pixel values, and $a$ is the decoded parameter normalized to [0, 1] based on range parameters stored with the data.

In some embodiments, the encoding includes downsizing the pixel parameters before grouping of the parameters of different color sub-pixels and different luminance levels, and the encoding includes upsizing the pixel parameters after the de-grouping parameter block and using the upsized parameters for pixel processing.

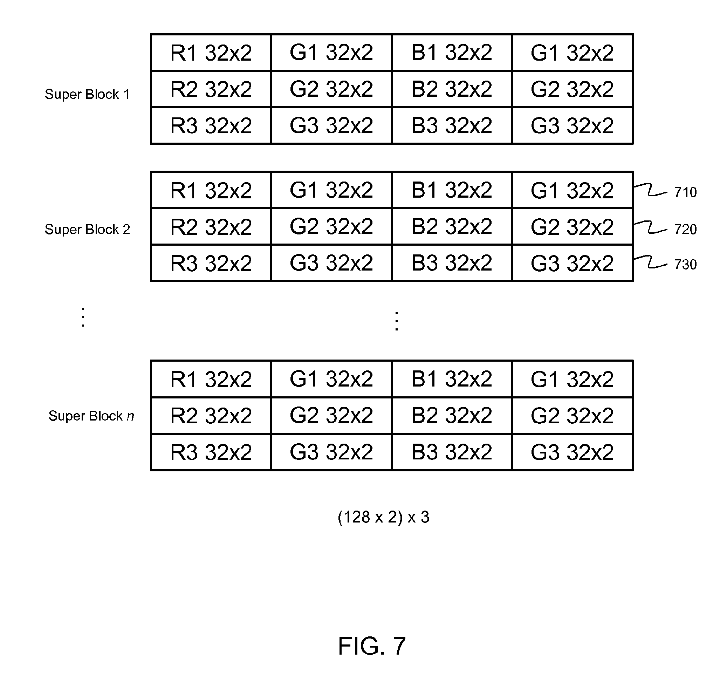

According to another embodiment of the present invention, each sub-pixel of the display panel may have a plurality of parameters for different luminance levels of the sub-pixel. FIG. 7 shows an example grouping of the parameters in a super block arrangement (e.g., Super Block 1, Super Block 2, ..., Super Block n). Each super block includes three blocks and each block comprises parameters for one particular luminance level. In this example, there is a set of parameters for a relatively low luminance level 710, a relatively high luminance level 730, that is higher than the relatively low luminance level 710, and a luminance level that is between the low and high luminance levels (e.g., mid-level 720). Therefore, one super block comprises parameters for different luminance levels, and one block within the super block comprises parameters for different color sub-pixels which are further grouped as sub-blocks. While a particular grouping of the parameters are shown in FIGS. 5 and 7, they are described merely as example arrangements and other block arrangements are possible.

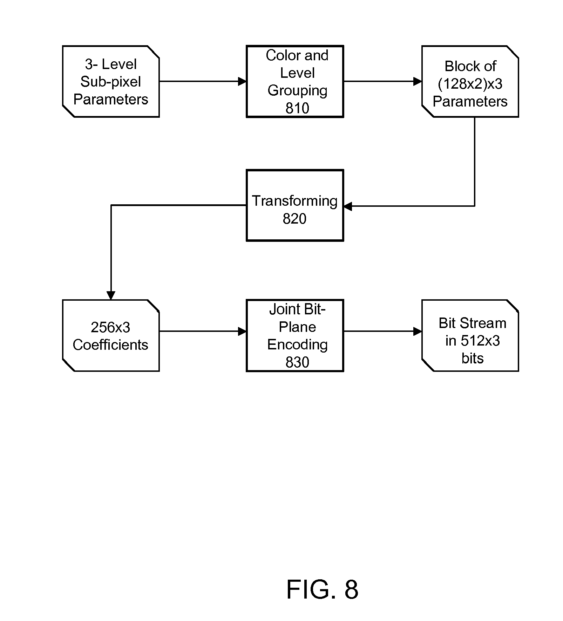

FIG. 8 shows a flow diagram for compressing the parameters for multiple luminance levels. According to the embodiment, the parameters for all sub-pixels of the display panel are determined for three different luminance levels (e.g., high, middle, low). The sub-pixels are grouped into super blocks according to the color of the sub-pixels and the luminance levels 810. In this example embodiment, each super block has a size of 768 parameters comprised of three blocks of 128x2 parameters each. After grouping the parameters into the super blocks, a mathematical transform such as a Hadamard or Haar transform 820 is applied to each of the 768 parameters to generate a sequence of 256x3 (or 768) integer coefficients following a predefined scan order depending on the size of the block. The following integer transform can be applied:

$$T_2 = H_1 - H_2,$$

$$t = H_2 + [T_2 \gg 1],$$

$$T_1 = H_3 - t,$$

$$T_3 = t + [T_1 \gg 1],$$

where H represents the different luminance levels for each color sub-pixel (e.g., R, G, B) and T represents the actual values that are used for compression. By denoting $D(T_n)$ as the corresponding decoded values, the following may be calculated:

$$t = D(T_3) - [D(T_1) \gg 1].$$

$$H_3 = t + D(T_1),$$

$$H_2 = t - [D(T_2) \gg 1],$$

$$H_1 = H_2 + D(T_2).$$

For some block sizes/arrangements, the scan order may be, for example, a progressive scan order, whereas for other block sizes/arrangements, the scan order may be a zigzag or other scan order. The coefficients are then packed into a sequence of bits (e.g., bit stream) by scanning the coefficients from the highest bit plane to the lower bit planes and encoding 830 the joint bit planes as runs of zero and signs for each non-zero coefficient. In some embodiments, the encoding of the runs of zero may be according to a variable-length code (VLC) table, as well known to those having ordinary skill in the art. The scanning and encoding continues until the targeted data size (e.g., 512x3 bits for 4-to-1 compression) is reached. In other words, each of the 768 parameters is scanned according to a predefined scanning order to apply a Hadamard or Haar transform to generate 768 integer coefficients. A code pre-generated code table (e.g., lookup table) is used to pack the coefficients into a sequence of bits by encoding 830.

Although the present invention has been described with reference to the example embodiments, those skilled in the art will recognize that various changes and modifications to the described embodiments may be performed, all without departing from the spirit and scope of the present invention. Furthermore, those skilled in the various arts will recognize that the present invention described herein will suggest solutions to other tasks and adaptations for other applications. For example, the embodiment of the present invention may be applied to any image devices such as, for example, but not limited to, display panels, cameras, and printers, that store and retrieve device-specific per-pixel parameters for improving image quality.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

**Claims**

1. A method for compensating pixel luminance of a display panel (140), the method comprising:

   receiving compressed compensation parameters corresponding to parameter blocks of sub-pixels;
   receiving an input image (450);
   adjusting the input image (450) according to the compressed compensation parameters; and
   displaying the adjusted input image (450) at the display panel (140).

2. The method of claim 1, wherein the parameter blocks are grouped based on at least one of: color of the sub-pixels, luminance level of the sub-pixels, and spatial location of the sub-pixels.

3. The method of claim 1 or 2, wherein the compressed compensation parameters comprise compensation parameters that are compressed by:

   generating parameter coefficients based on a lookup table for each compensation parameter of the compensation parameters, each compensation parameter corresponding to respective ones of the sub-pixels and grouped into the parameter blocks; and
   forming a bit stream with the parameter coefficients for each parameter block of the parameter blocks.

4. The method of anyone of claims 1 to 3, further comprising decompressing the received compressed compensation parameters before the adjusting of the input image (450).

5. The method of claim 4, wherein the decompressing comprises:

   decoding bit streams of the compressed compensation parameters to recover parameter coefficients based on a lookup table; and
   performing an inverse mathematical transform to recover the compensation parameters corresponding to respective ones of the sub-pixels of the display panel (140).

6. A method for compensating pixel luminance of a display panel (140), the method comprising:

   retrieving a compressed bit stream from memory (410);
   decoding the compressed bit stream based on a lookup table to generate parameter coefficients for compensation parameters corresponding to respective ones of sub-pixels within a parameter block of sub-pixels;
   performing an inverse mathematical transform to the parameter coefficients to recover the compensation parameters; and
   applying the recovered compensation parameters to an input image signal (450) to correct the pixel luminance of the display panel (140).

7. The method of claim 6, wherein a number of bits in the bit stream is less than a total number of bits of the compensation parameters of the parameter block.

8. The method of claim 6 or 7, wherein the compensation parameters of the parameter block comprise compensation parameters that correspond to same color sub-pixels.

9. The method of anyone of claims 6 to 8, wherein the parameter blocks are grouped based on luminance level of the sub-pixels, or based on spatial location of the sub-pixels.

10. The method of anyone of claims 6 to 9, wherein compensation information contained in the compensation parameter is shared with other compensation parameters in the same parameter block.

11. The method of anyone of claims 6 to 10, wherein the parameter block corresponds to a row of sub-pixels.

12. The method of anyone of claims 6 to 11, wherein all parameter blocks have a same number of compensation parameters.

13. A display panel (140), comprising:

   a memory (410) comprising compressed compensation parameters for sub-pixels of the display panel;
   a decoder configured to decompress the compressed compensation parameters; and
   a processor (470) configured to apply the decompressed compensation parameters to input image signals, each compensation parameter of the compensation parameters corresponding to respective ones of the sub-pixels,
   wherein the compensation parameters are compressed by:

      grouping the compensation parameters into parameter blocks;
      generating parameter coefficients for each compensation parameter of the parameter blocks based on a lookup table; and
      forming a bit stream with the parameter coefficients for each parameter block of the parameter blocks.

**14.** The display panel (140) of claim 13, wherein the compensation parameters are grouped according to a color of corresponding sub-pixels.

**15.** The display panel (140) of claim 13, wherein the compensation parameters are grouped according to a luminance level of corresponding sub-pixels.

**16.** The display panel (140) of claim 13, wherein the compensation parameters are grouped according to a spatial location corresponding sub-pixels.

**17.** The display panel (140) of anyone of claims 13 to 16, wherein the parameter blocks have a same size.

**18.** The display panel (140) of anyone of claims 6 to 17, wherein the generating of the parameter coefficients comprises applying a mathematical transform to each compensation parameter.

**19.** The display panel (140) of claim 18, wherein the mathematical transform is a Hadamard transform or a Haar transform.

**20.** The display panel (140) of anyone of claims 13 to 19, wherein the decompressing of the compressed compensation parameters comprises:

decoding the bit stream to recover the parameter coefficients based on a lookup table; and performing an inverse mathematical transform to recover the compensation parameters corresponding to respective ones of the sub-pixels of the display panel (140).

FIG. 1

EP 2 924 680 A2

FIG. 2

EP 2 924 680 A2

200

R1  G1  B2  G2  R3  G3  B4  G4  R1  G1  B2  G2  R3  G3  B4  G4

FIG. 3

FIG. 4

EP 2 924 680 A2

|  | 510 | 520 | 530 | 540 |
|--------|--------|--------|--------|--------|
| Block 1 | R 32x2 | G 32x2 | B 32x2 | G 32x2 |
| Block 2 | R 32x2 | G 32x2 | B 32x2 | G 32x2 |
| ⋮ | | | | |
| Block *n* | R 32x2 | G 32x2 | B 32x2 | G 32x2 |

128 x 2

FIG. 5

FIG. 6

Super Block 1

| R1 32x2 | G1 32x2 | B1 32x2 | G1 32x2 |
|---------|---------|---------|---------|
| R2 32x2 | G2 32x2 | B2 32x2 | G2 32x2 |
| R3 32x2 | G3 32x2 | B3 32x2 | G3 32x2 |

Super Block 2

| R1 32x2 | G1 32x2 | B1 32x2 | G1 32x2 | 710 |
|---------|---------|---------|---------|-----|
| R2 32x2 | G2 32x2 | B2 32x2 | G2 32x2 | 720 |
| R3 32x2 | G3 32x2 | B3 32x2 | G3 32x2 | 730 |

Super Block *n*

| R1 32x2 | G1 32x2 | B1 32x2 | G1 32x2 |
|---------|---------|---------|---------|
| R2 32x2 | G2 32x2 | B2 32x2 | G2 32x2 |
| R3 32x2 | G3 32x2 | B3 32x2 | G3 32x2 |

(128 x 2) x 3

FIG. 7

FIG. 8